# EUROPEAN PATENT APPLICATION

(11) **EP 4 564 761 A1**
(43) Date of publication of application: **04.06.2025**
(21) Application number: 23846332.7
(22) Date of filing: 20.07.2023
(51) Int. Cl.: H04L 27/26

(54) **COMMUNICATION DEVICE, COMMUNICATION DEVICE CONTROL METHOD, AND PROGRAM**

(30) Priority: 29.07.2022 JP 2022122022
(71) Applicant: CANON KABUSHIKI KAISHA, Tokyo 146-8501 (JP)
(72) Inventor: TAKADA Tomoyuki, Tokyo 146-8501 (JP)
(74) Representative: Canon Europe Limited
(86) International application number: PCT/JP2023/026492
(87) International publication number: WO 2024/024601

(57) **Abstract**

When a PPDU with a bandwidth of 480 MHz is transmitted, a PPDU composed of the 5880 data subcarriers and the 96 pilot subcarriers in a predetermined order is transmitted.

## Description

### Technical Field

The present invention relates to a communication apparatus that performs wireless communication, a control method for a communication apparatus, and a program.

### Background Art

IEEE 802.11 series standards are known as WLAN communication standards developed by IEEE (Institute of Electrical and Electronics Engineers). WLAN is the abbreviation of Wireless Local Area Network. The IEEE 802.11 series standards include standards, such as IEEE 802.11a/b/g/n/ac/ax/be standards.

PTL 1 describes that the IEEE 802.11ax standard implements wireless communication using OFDMA (Orthogonal frequency-division multiple access). With the IEEE 802.11ax standard, high peak throughput is implemented by performing wireless communication using OFDMA. In the IEEE 802.11be standard that is a successor standard of the IEEE 802.11ax standard, the channel width is expanded to 320 MHz in order to implement improvement in throughput.

At the IEEE, to further improve throughput, expansion of the channel width to 480 MHz or 640 MHz has been being studied.

### Citation List

### Patent Literature

PTL 1: Japanese Patent Laid-Open No. 2018-050133

### Summary of Invention

### Technical Problem

However, in the IEEE 802.11 series standards, a subcarrier configuration of a Physical Layer Protocol Data Unit (PPDU) with a channel width of 480 MHz or 640 MHz is not defined. For this reason, it is not possible to perform communication by using PPDU with a channel width of 480 MHz or 640 MHz.

### Solution to Problem

According to the present invention, a communication apparatus includes a transmission unit arranged to transmit a Physical Layer Protocol Data Unit (PPDU) compliant with an IEEE 802.11 series standard by using 5880 data subcarriers and 96 pilot subcarriers, and the transmission unit is arranged to, when the transmission unit transmits the PPDU with a bandwidth of 480 MHz, transmit the PPDU composed of the 5880 data subcarriers and the 96 pilot subcarriers in a predetermined order.

According to the present invention, a communication apparatus includes a transmission unit arranged to transmit a Physical Layer Protocol Data Unit (PPDU) compliant with an IEEE 802.11 series standard by using 7840 data subcarriers and 128 pilot subcarriers, and the transmission unit is arranged to, when the transmission unit transmits the PPDU with a bandwidth of 640 MHz, transmit the PPDU composed of the 7840 data subcarriers and the 128 pilot subcarriers in a predetermined order.

### Advantageous Effects of Invention

According to the present invention, it is possible to perform communication by using a PPDU with a channel width of 480 MHz or 640 MHz.

### Brief Description of Drawings

Attached drawings are included in the specification, constitute part of the specification, illustrate an embodiment of the present invention, and are used to illustrate the principle of the present invention together with the description thereof.

[Fig. 1] Fig. 1 is a diagram that shows the configuration of a network in the present invention.
[Fig. 2] Fig. 2 is a diagram that shows the hardware configuration of a communication apparatus in the present invention.
[Fig. 3] Fig. 3 is a diagram that shows the functional configuration of the communication apparatus in the present invention.
[Fig. 4] Fig. 4 is a flowchart that shows the operations of the communication apparatus in relation to transmission of a PPDU.
[Fig. 5] Fig. 5 is a diagram that shows the subcarrier configurations of data fields of a PPDU with a channel width of 480 MHz.
[Fig. 6] Fig. 6 is a table that shows the relationship among the type of RUs that compose a 480 MHz channel or a 640 MHz channel, their indexes, and the indexes of subcarriers that compose the RUs.
[Fig. 7] Fig. 7 is a table that shows the relationship among each of the bands 500 to 505 shown in Fig. 5 and composing a 480 MHz channel, and variables m, σ, and n in Fig. 6.
[Fig. 8] Fig. 8 is a diagram that shows the relationship among the type of RUs that compose a 640 MHz channel, their indexes, and the indexes of subcarriers that compose the RUs.
[Fig. 9] Fig. 9 is a table that shows the relationship among each of the bands 800 to 807 shown in Fig. 8 and composing a 640 MHz channel, and variables m, σ, and n in Fig. 6.
[Fig. 10] Fig. 10 is a flowchart that shows the operations of the communication apparatus in relation to reception of a PPDU.
[Fig. 11] Fig. 11 is a table that shows an example of the relationship between the value of Bandwidth field of a U-SIG-1 part of a U-SIG field and a channel width.

### Description of Embodiments

Hereinafter, an embodiment of the present invention will be described in detail with reference to the accompanying drawings. The configuration that will be described in the following embodiment is just one example, and the present invention is not limited to the illustrated configuration.

### (Configuration of Wireless Communication System)

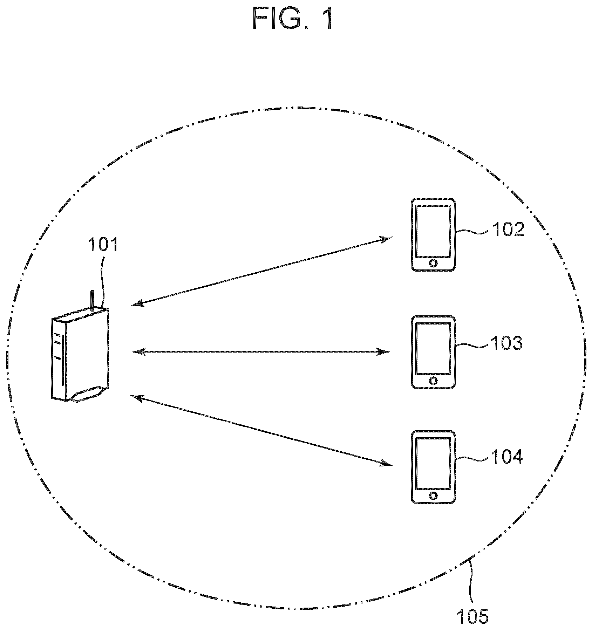

Fig. 1 shows the configuration of a wireless network to which communication apparatuses 101 to 104 according to the present invention belong.

The present invention is applied to the communication apparatuses 101 to 104. The communication apparatuses 101 to 104 are configured to be capable of performing wireless communication compliant with a successor standard of the IEEE 802.11be standard targeting a maximum transmission speed of 46.08 Gbps. The successor standard targets a transmission speed exceeding 90 Gbps to 100 Gbps as a maximum transmission speed. In this successor standard of the 802.11be, a new target to be achieved is to, for example, support highly-reliable communication and low-latency communication. In consideration of the above, in the present embodiment, the successor standard of the IEEE 802.11be, targeting a transmission speed exceeding 90 Gbps to 100 Gbps as a maximum transmission speed, is temporarily referred to as IEEE 802.11UHR (Ultra High Reliability).

The name IEEE 802.11UHR is provided for the sake of convenience in consideration of the target to be achieved by the successor standard and attractive features in the standard and can be another name in a state where the standard is fixed. On the other hand, it should be noted that the specification and the attached claims are fundamentally applicable to all the successor standards of the 802.11be standard, which can support wireless communication.

The communication apparatus 101 (hereinafter, also referred to as AP 101) is an access point (hereinafter, AP) and is a UHR AP (Ultra High Reliability Access Point) that supports the IEEE 802.11UHR standard. The communication apparatuses 102 to 104 (hereinafter, also referred to as STAs 102 to 104) are non-AP UHR STAs that support a station (hereinafter, STA) IEEE 802.11UHR standard. The AP 101 and the STAs 102 to 104 are capable of performing wireless communication compliant with the IEEE 802.11UHR standard. IEEE is the abbreviation of Institute of Electrical and Electronics Engineers.

The communication apparatuses 101 to 104 are capable of performing communication with the frequency bandwidths in 2.4 GHz band, 5 GHz band, and 6 GHz band. The communication apparatuses 101 to 104 are capable of performing communication with bandwidths (channel widths) of 20 MHz, 40 MHz, 80 MHz, 160 MHz, 320 MHz, 480 MHz, and 640 MHz. One or more of the STAs 102 to 104 may operate only with a channel width narrower than or equal to 320 MHz or 480 MHz.

The communication apparatuses 101 to 104 are capable of performing multi user (MU) communication by performing OFDMA communication compliant with the IEEE 802.11UHR standard. The multi user communication multiplexes signals of a plurality of users. OFDMA is the abbreviation of Orthogonal Frequency Division Multiple Access. In OFDMA communication, divided parts (RUs or Resource Units) of a frequency band are respectively allocated to the STAs so as not to overlap each other, and carriers of the STAs are orthogonal to one another. For this reason, the AP is capable of communicating with the plurality of STAs in parallel.

The communication apparatuses 101 to 104 are capable of achieving MU communication through MU MIMO (Multi User Multiple-Input and Multiple-Output) communication. In this case, the communication apparatus 101 has a plurality of antennas and assigns one or more antennas to each of the other communication apparatuses. Thus, the communication apparatus 101 is capable of achieving simultaneous communication with the plurality of STAs. The communication apparatus 101 is capable of simultaneously transmitting radio waves to the plurality of STAs by adjusting the radio waves such that the radio waves respectively transmitted to the communication apparatuses 102 to 104 do not interfere with each other.

The communication apparatuses 101 to 104 are assumed to support the IEEE 802.11UHR standard. In addition to this, the communication apparatuses 101 to 104 may support the IEEE 802.11 standards earlier than the IEEE 802.11UHR standard. Specifically, the communication apparatuses 101 to 104 may support at least any one of the IEEE 802.11a/b/g/n/ac/ax/be standards.

In addition to the IEEE 802.11 standard series, the communication apparatuses 101 to 104 may support other communication standards, such as Bluetooth (registered trademark), NFC, UWB, ZigBee, and MBOA.

UWB is the abbreviation of Ultra Wide Band. MBOA is the abbreviation of Multi Band OFDM Alliance. NFC is the abbreviation of Near Field Communication. UWB includes wireless USB, wireless 1394, WiNET, and the like. The communication apparatuses 101 to 104 may support communication standards of wired communication of a wired LAN or the like.

Specific examples of the AP 101 include a wireless LAN router and a personal computer (PC); however, the AP 101 is not limited thereto.

The AP 101 may be an information processing apparatus, such as a wireless chip, which is capable of performing wireless communication compliant with the IEEE 802.11UHR standard.

Specific examples of the STAs 102 to 104 include a camera, a tablet, a smartphone, a PC, a mobile phone, a video camera, and a headset; however, the STAs 102 to 104 are not limited thereto. The STAs 102 to 104 each may be an information processing apparatus, such as a wireless chip, which is capable of performing wireless communication compliant with the IEEE 802.11UHR standard.

The wireless network of Fig. 1 is made up of one AP and three STAs; however, the number of APs and the number of STAs are not limited thereto. For example, one more STA may be provided. At this time, the channel and channel width of a link to be established do not matter.

### (Configurations of AP and STA)

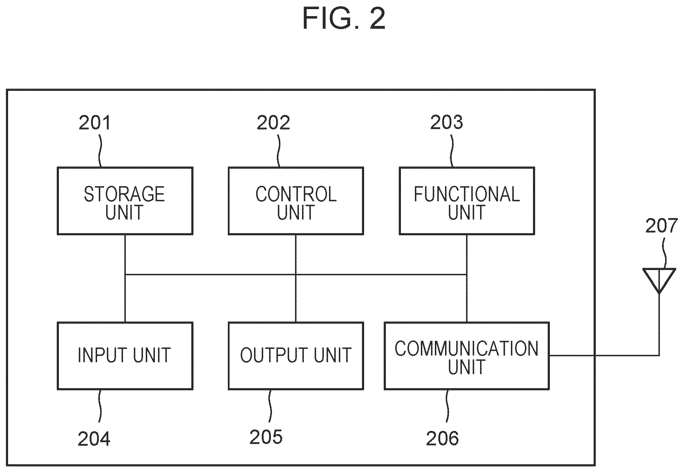

Fig. 2 shows an example of the hardware configuration of the AP 101 in the present embodiment. The AP 101 includes a storage unit 201, a control unit 202, a functional unit 203, an input unit 204, an output unit 205, a communication unit 206, and an antenna 207. A plurality of the antennas may be provided.

The storage unit 201 is made up of one or more memories, such as a ROM and a RAM, and stores various pieces of information, such as computer programs for executing various operations (described later) and communication parameters for wireless communication. The ROM is the abbreviation of Read Only Memory. The RAM is the abbreviation of Random Access Memory. Other than the memories, such as a ROM and a RAM, a storage medium, such as a flexible disk, a hard disk drive, an optical disk, a magneto-optical disc, a CD-ROM, a CD-R, a magnetic tape, a nonvolatile memory card, and a DVD, may be used as the storage unit 201. The storage unit 201 may include a plurality of memories or the like.

The control unit 202 is made up of, for example, one or more processors, such as a CPU and an MPU, and controls the whole of the AP 101 by running the computer programs stored in the storage unit 201. The control unit 202 may be configured to control the whole of the AP 101 by cooperation of the computer programs stored in the storage unit 201 with an OS (Operating System). The control unit 202 generates data and signals (wireless frame) to be transmitted in communication with another communication apparatus. The CPU is the abbreviation of Central Processing Unit. The MPU is the abbreviation of Micro Processing Unit. The control unit 202 may include a plurality of processors, such as multi cores, and may be configured to control the whole of the AP 101 by using the plurality of processors.

The control unit 202 executes a predetermined process, such as wireless communication, image pickup, printing, or projection, by controlling the functional unit 203. The functional unit 203 is hardware for the AP 101 to execute the predetermined process.

The input unit 204 receives various operations from a user. The output unit 205 performs various outputs to the user via a monitor screen or a speaker. Here, an output by the output unit 205 may be display on a monitor screen, a voice output through the speaker, a vibration output, or the like. Both the input unit 204 and the output unit 205 may be implemented as one module like a touch panel. Each of the input unit 204 and the output unit 205 may be integrated with the AP 101 or may be separated from the AP 101.

The communication unit 206 controls wireless communication compliant with the IEEE 802.11UHR standard.

The communication unit 206 may control wireless communication compliant with another IEEE 802.11 series standard in addition to the IEEE 802.11UHR standard or control wired communication of a wired LAN or the like. The communication unit 206 controls the antenna 207 to transmit or receive a signal for wireless communication, generated by the control unit 202.

When the AP 101 supports not only the IEEE 802.11UHR standard but also the NFC standard, the Bluetooth standard, or the like, the communication unit 206 may control wireless communication compliant with these communication standards. When the AP 101 is capable of performing wireless communication compliant with a plurality of communication standards, the AP 101 may be configured to individually include a communication unit and an antenna that support a corresponding one of the communication standards. The AP 101 communicates data, such as image data, document data, and picture data, with the STAs 102 to 104 via the communication unit 206. The antenna 207 may be formed separately from the communication unit 206 or may be formed as one module together with the communication unit 206.

The antenna 207 is an antenna capable of communication in the 2.4 GHz band, the 5 GHz band, and 6 GHz band. The number of antennas of the AP 101 may be one or may be multiple. The AP 101 may have a different antenna for each frequency band. When the AP 101 has a plurality of antennas, the AP 101 may have the communication units 206 respectively corresponding to the antennas.

Each of the STAs 102 to 104 has a similar hardware configuration to the AP 101.

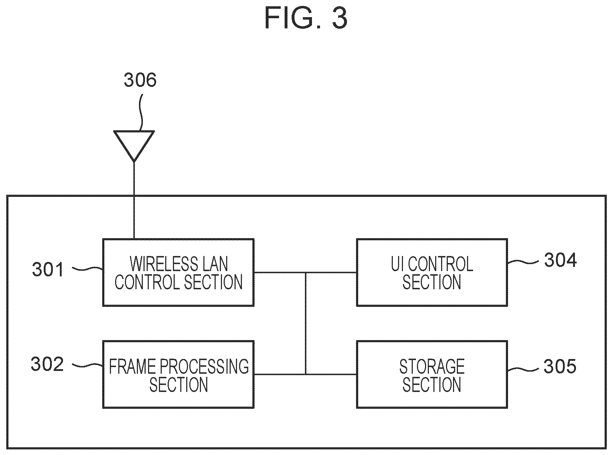

Fig. 3 shows a block diagram of the functional configuration of the AP 101 in the present embodiment. Each of the STAs 102 to 104 also has a similar configuration. Here, it is assumed that the AP 101 includes a wireless LAN control section 301. The number of the wireless LAN control sections is not limited to one and may be multiple. The AP 101 further includes a frame processing section 302, a UI control section 304, a storage section 305, and a wireless antenna 306.

The wireless LAN control section 301 is configured to include an antenna and a circuit for transmitting a wireless signal to or receiving a wireless signal from another wireless LAN apparatus, and a program to control them. The wireless LAN control section 301 executes communication control over a wireless LAN based on a frame generated by the frame processing section 302 in accordance with the IEEE 802.11 standard series.

The frame processing section 302 processes a wireless control frame transmitted or received by the wireless LAN control section 301. The contents of wireless control, generated and analyzed by the frame processing section 302, may be constrained by settings saved in the storage section 305. The contents of wireless control may be changed by user settings from the UI control section 304. Information on the frame generated is sent to the wireless LAN control section 301 and then transmitted to a communication partner. The information on the frame received by the wireless LAN control section 301 is transferred to the frame processing section 302 to be analyzed.

The UI control section 304 is configured to include hardware related to a user interface, such as a touch panel and a button, for receiving operation to the STAs 102 to 104 by a user (not shown) of the AP 101, and programs for controlling them. The UI control section 304 also has a function to, for example, display an image or the like or present information of voice output or the like to the user.

The storage section 305 is a storage device that can be made up of a ROM, a RAM, and the like, saving programs and data based on which the AP 101 operates.

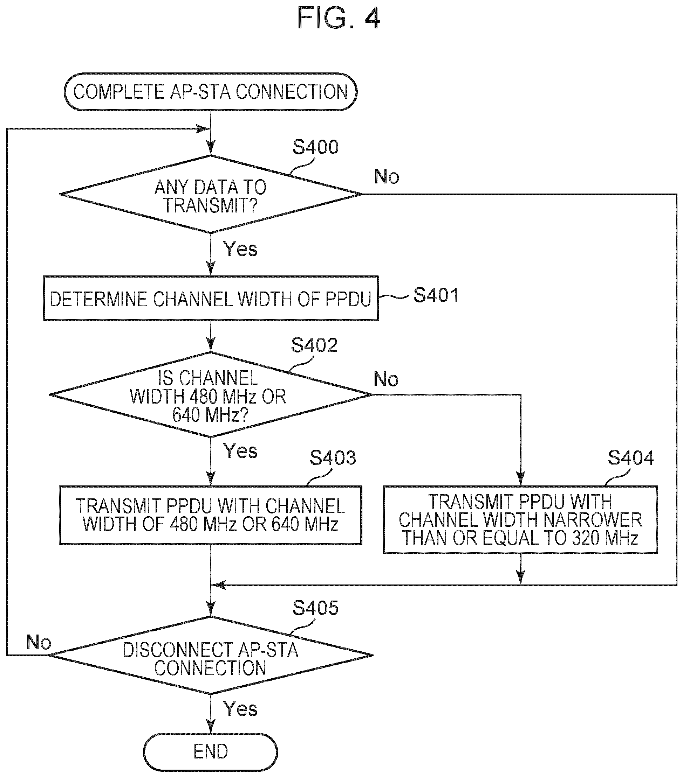

Next, the flow of the communication apparatuses 101 to 104 related to transmission of a Physical Layer Protocol Data Unit (PPDU) will be described with reference to Fig. 4. The flow shown in Fig. 4 starts when, for example, the AP 101 and any one of the STAs 102 to 104 connect with each other, that is, the STA joins Basic Service Set (BSS) established by the AP 101. As for the STAs 102 to 104, the flow starts when the STA connects with the AP 101.

The STAs 102 to 104, for example, receive a Beacon frame transmitted from the AP 101, transmit an Association Request frame for a request to join the BSS to the AP, and then receive an Association Response frame that is a response frame for the Association Request frame, thus joining the BSS.

The STAs 102 to 104, in advance of an exchange of Association Request and Response frames, may transmit a Probe Request frame for finding an AP, and the AP 101 may receive a Probe Response frame that is a response frame for the Probe Request frame.

Hereinafter, the flow of the communication apparatus 101 will be described; however, the communication apparatuses 102 to 104 that are STAs also operate in accordance with a similar flow to this flow.

In step S400, the communication apparatus 101 determines whether there is data to transmit. When the communication apparatus 101 determines that there is data to transmit, the process proceeds to step S401.

In step S401, the communication apparatus 101 determines the channel width of a PPDU to contain data to transmit. The channel width is determined to any one of 20 MHz, 40 MHz, 80 MHz, 160 MHz, 320 MHz, 480 MHz, and 640 MHz. The channel width is determined in accordance with a capability that each of the communication apparatuses 101 to 104 handles, a current operating channel width, the status of use of a channel, and the like, and is, for example, determined such that the throughput increases as much as possible between the apparatuses that transmit and receive a data signal. Then, after the channel width to transmit the PPDU is determined in step S401, the process proceeds to step S402.

In step S402, the communication apparatus 101 determines whether the channel width determined in step S401 is 480 MHz or 640 MHz or narrower than or equal to 320 MHz. Then, when it is determined that the channel width determined in step S401 is 480 MHz or 640 MHz, the process proceeds to step S403.

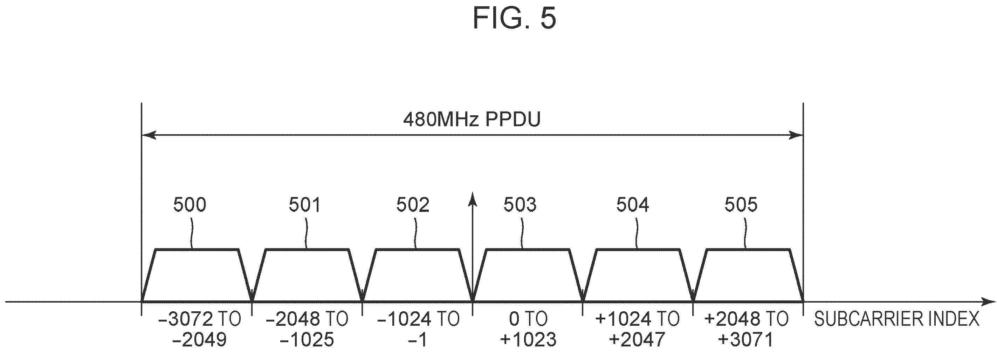

When the channel width determined in step S401 is 480 MHz, the communication apparatus 101 in step S403 transmits a PPDU containing data fields of orthogonal frequency division multiplexing signals with subcarrier configurations shown in Fig. 5. Fig. 5 shows that the 480 MHz channel width is composed of six bands 500 to 505. Each of the bands 500 to 505 has a bandwidth of 80 MHz, and the bands do not overlap each other. The bands 500 to 505 are arranged in order of the bands 500, 501, 502, 503, 504, 505 from the lower frequency side. Each of the bands 500 to 505 is composed of 1024 subcarriers. Therefore, the channel with a channel width of 480 MHz is composed of 6144 subcarriers. These 6144 subcarriers include subcarriers used to communicate data signals or pilot signals and null subcarriers that are subcarriers not used to communicate signals. The interval between the subcarriers is 78.125 kHz, and an index is assigned to each subcarrier.

Subcarriers used to communicate data signals are referred to as data subcarriers, and subcarriers used to communicate pilot signals are referred to as pilot subcarriers. The index assigned to each subcarrier increases as the frequency increases. For example, the indexes of subcarriers that compose the band 500 are -3072 to -2049 in order from the lower frequency side toward the higher frequency side. The indexes of subcarriers that compose the band 501 are -2048 to -1025 in order from the lower frequency side toward the higher frequency side. The indexes of subcarriers that compose the band 502 are -1024 to -1 in order from the lower frequency side toward the higher frequency side. The indexes of subcarriers that compose the band 503 are 0 to +1023 in order from the lower frequency side toward the higher frequency side. The indexes of subcarriers that compose the band 504 are +1024 to +2047 in order from the lower frequency side toward the higher frequency side. The indexes of subcarriers that compose the band 505 are +2048 to +3071 in order from the lower frequency side toward the higher frequency side. In this way, the 480 MHz channel is composed of subcarriers with indexes of -3072 to +3071. In the present embodiment, 6144 subcarriers that compose the 480 MHz channel include 5880 data subcarriers, 96 pilot subcarriers, and 168 null subcarriers. When the positions of 5880 data subcarriers and 96 pilot subcarriers on the frequency axis are determined in advance in the 480 MHz channel, the communication apparatuses 101 to 104 are capable of communicating with each other in the 480 MHz channel. The details of the positions of subcarriers on the frequency axis will be described later. Fig. 5 is a diagram of a baseband signal, and the subcarrier with index 0 is a Direct Current (DC) subcarrier. A wireless signal to be transmitted or received by the antenna 207 is a signal obtained by up-converting a baseband signal into a wireless frequency band by using the DC subcarrier as a carrier frequency for the wireless signal.

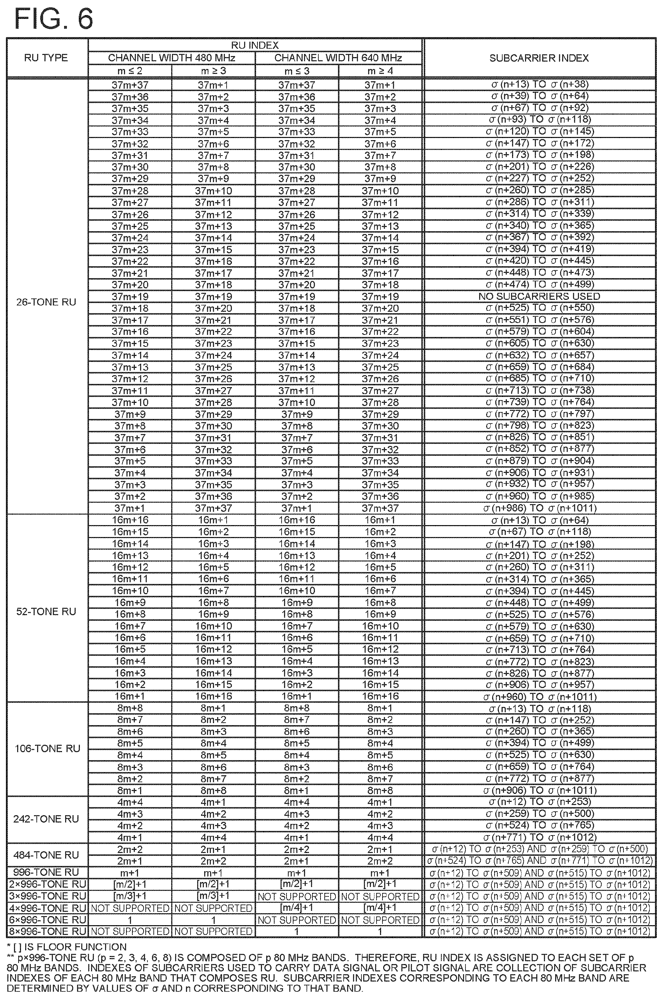

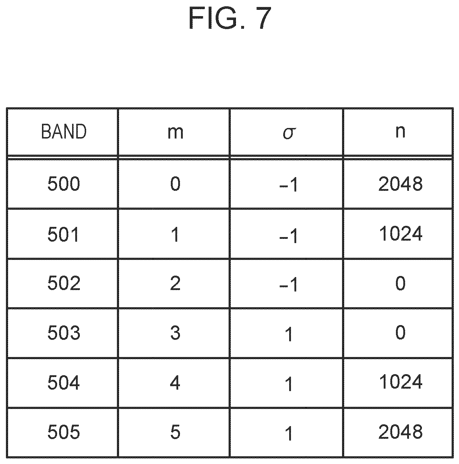

Figs. 6 and 7 show the relationship among the types of Resource Units (RUs) (RU types) that compose the 480 MHz channel, the indexes of RUs (RU indexes), and the indexes of subcarriers (subcarrier indexes) that compose the RUs. As for the RU indexes, two columns to which the caption "Channel Width 480 MHz" is assigned in Fig. 6 apply. These columns are classified into cases with the value of variable m shown in Fig. 7. Fig. 7 shows the relationship between each of the bands 500 to 505 that compose the 480 MHz channel and variables m, σ, and n in Fig. 6. An RU is composed of a plurality of subcarriers used to communicate a data signal or a pilot signal and does not contain a null subcarrier.

An RU type indicates the number of subcarriers that compose one RU. For example, in the RU type of 26-tone RU, one RU is composed of 26 subcarriers. RU types include 26-tone RU, 52-tone RU, 106-tone RU, 242-tone RU, 484-tone RU, 996-tone RU, 2×996-tone RU, 3×996-tone RU, and 6×996-tone RU. The numbers of subcarriers used to communicate a data signal or a pilot signal by RU in RU types are respectively 26, 52, 106, 242, 484, 996, 2 × 996, 3 × 996, and 6 × 996.

When, for example, the 480 MHz channel is composed of 26-tone RUs, m = 3 for the band 503 in Fig. 7, so the indexes of RUs that compose the band 503 are 37 × 3 + 1 to 37 × 3 + 37, that is, 112 to 148. Hereinafter, an RU with index x is referred to as RUx. For example, an RU with index 112 is referred to as RU112. As for the band 503, σ = 1 and n = 0 in Fig. 7, so the indexes of subcarriers that compose the RU112 are 1 × (0 + 13) to 1 × (0 + 38), that is, +13 to +38. As for each of the other bands 500 to 502, 504, and 505 as well, the indexes of RUs that compose a corresponding one of the bands and the indexes of subcarriers that compose each RU can be found. When the 480 MHz channel is composed of 26-tone RUs, there are an RU1 to an RU222. The minimum index of subcarriers used to communicate a data signal or a pilot signal is -3059, and the maximum index is +3059. There are also indexes that indicate null subcarriers not included in the RUs between the minimum index and the maximum index of subcarriers used.

When, for example, the 480 MHz channel is composed of 996-tone RUs, m = 2 for the band 502 in Fig. 7, so the index of an RU that composes the band 502 is 2 + 1, that is, 3. σ = -1 and n = 0 in Fig. 7, so the indexes of subcarriers that compose the RU3 are -1 × (0 + 12) to -1 × (0 + 509) and -1 × (0 + 515) to -1 × (0 + 1012), that is, -12 to -509, and -515 to -1012. As for each of the other bands 500 to 502, 504, and 505 as well, the RU indexes of RUs that compose a corresponding one of the bands and the indexes of subcarriers that compose each RU can be found. When the 480 MHz channel is composed of 996-tone RUs, there are an RU1 to an RU6. The minimum index of subcarriers used to carry a data signal or a pilot signal is -3060, and the maximum index is +3060. There are also indexes that indicate null subcarriers not included in the RUs between the minimum index and the maximum index of subcarriers used.

When the RU type is of 996-tone RU, the indexes of subcarriers that are pilot subcarriers of the bands 500 to 505 are respectively {σ × (44 + n), σ × (112 + n), σ × (178 + n), σ × (246 + n), σ × (292 + n), σ × (360 + n), σ × (426 + n), σ × (494 + n), σ × (530 + n), σ × (598 + n), σ × (664 + n), σ × (732 + n), σ × (778 + n), σ × (846 + n), σ × (912 + n), σ × (980 + n)}. For this reason, the indexes of subcarriers that are pilot subcarriers in the band 502 in the case where the 480 MHz channel is composed of 996-tone RUs are respectively {-44, -112, -178, -246, -292, -360, - 426, -494, -530, -598, -664, -732, -778, -846, -912, -980}.

When the 480 MHz channel is composed of 6×996-tone RUs, the bandwidth of 480 MHz is composed of one RU. In other words, the index of an RU that composes the bands 500 to 505 is 1. As for the band 500, σ = -1 and n = 2048 in Fig. 7, so the indexes of subcarriers that compose the region of the band 500 of the RU1 are -1 × (2048 + 12) to -1 × (2048 + 509), and -1 × (2048 + 515) to -1 × (2048 + 1012), that is, -2060 to -2557, and -2563 to -3060. As for the band 505, σ = 1 and n = 2048 in Fig. 7, so the indexes of subcarriers that compose the region of the band 505 of the RU1 are 1 × (2048 + 12) to 1 × (2048 + 509), and 1 × (2048 + 515) to 1 × (2048 + 1012), that is, 2060 to 2557, and 2563 to 3060. As for each of the other bands 501 to 504 as well, the indexes of subcarriers that compose the region of a corresponding one of the bands 501 to 504 in the RU1 can be found. When the 480 MHz channel is composed of 6×996-tone RUs, there is only an RU1. The minimum index of subcarriers used to carry a data signal or a pilot signal is -3060, and the maximum index is +3060. There are also indexes that indicate null subcarriers not included in the RU between the minimum index and the maximum index of subcarriers used.

When the RU type is of 6×996-tone RU, the indexes of subcarriers that are pilot subcarriers of the bands 500 to 505 are respectively {σ × (44 + n), σ × (112 + n), σ × (178 + n), σ × (246 + n), σ × (292 + n), σ × (360 + n), σ × (426 + n), σ × (494 + n), σ × (530 + n), σ × (598 + n), σ × (664 + n), σ × (732 + n), σ × (778 + n) , σ × (846 + n), σ × (912 + n), σ × (980 + n)}. For this reason, the indexes of subcarriers that are pilot subcarriers in the band 500 in the case where the 480 MHz channel is composed of 6×996-tone RUs are respectively {-2092, -2160, -2226, -2294, -2340, - 2408, -2474, -2542, -2578, -2646, -2712, -2780, -2826, - 2894, -2960, -3028}. In this way, in the present embodiment, the positions of the data subcarriers and pilot subcarriers on the frequency axis are repeated six times in units of 80 MHz.

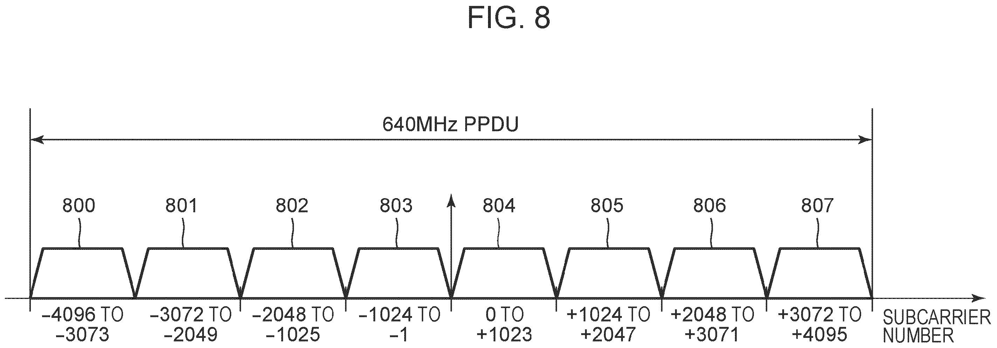

When the channel width determined in step S401 is 640 MHz, the communication apparatus 101 in step S403 transmits a PPDU containing data fields of orthogonal frequency division multiplexing signals with subcarrier configurations shown in Fig. 8. Fig. 8 shows that the 640 MHz channel width is composed of eight bands 800 to 807. Each of the bands 800 to 807 has a bandwidth of 80 MHz, and the bands do not overlap each other. The bands 800 to 807 are arranged in order of the bands 800, 801, 802, 803, 804, 805, 806, 807 from the lower frequency side. Each of the bands 800 to 807 is composed of 1024 subcarriers. Therefore, the channel with a channel width of 640 MHz is composed of 8192 subcarriers. These 8192 subcarriers include subcarriers used to communicate data signals or pilot signals and null subcarriers that are subcarriers not used to communicate signals. The interval between the subcarriers is 78.125 kHz, and an index is assigned to each subcarrier. Subcarriers used to communicate data signals are referred to as data subcarriers, and subcarriers used to communicate pilot signals are referred to as pilot subcarriers. The index assigned to each subcarrier increases as the frequency increases. For example, the indexes of subcarriers that compose the band 800 are -4096 to -3073 in order from the lower frequency side toward the higher frequency side. The indexes of subcarriers that compose the band 801 are -3072 to -2049 in order from the lower frequency side toward the higher frequency side.

The indexes of subcarriers that compose the band 802 are -2048 to -1025 in order from the lower frequency side toward the higher frequency side. The indexes of subcarriers that compose the band 803 are -1024 to -1 in order from the lower frequency side toward the higher frequency side. The indexes of subcarriers that compose the band 804 are 0 to +1023 in order from the lower frequency side toward the higher frequency side. The indexes of subcarriers that compose the band 805 are +1024 to +2047 in order from the lower frequency side toward the higher frequency side. The indexes of subcarriers that compose the band 806 are +2048 to +3071 in order from the lower frequency side toward the higher frequency side. The indexes of subcarriers that compose the band 807 are +3072 to +4095 in order from the lower frequency side toward the higher frequency side. In this way, the indexes of subcarriers that compose the 640 MHz channel are -4096 to +4095. Fig. 8 is a diagram of a baseband signal, and the subcarrier with index 0 is a DC subcarrier. A wireless signal to be transmitted or received by the antenna 207 is a signal obtained by up-converting a baseband signal into a wireless frequency band by using the DC subcarrier as a carrier frequency for the wireless signal.

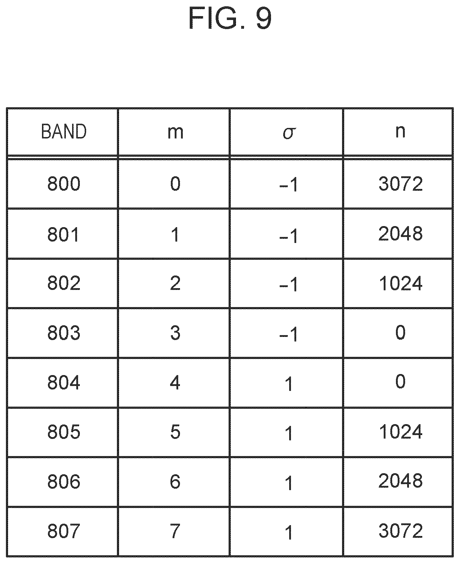

Figs. 6 and 9 show the relationship among the types of RUs (RU types) that compose the 640 MHz channel, the indexes of RUs (RU indexes), and the indexes of subcarriers (subcarrier indexes) that compose the RUs. As for the RU indexes, two columns to which the caption "Channel Width 640 MHz" is assigned in Fig. 6 apply. These columns are classified into cases with the value of variable m shown in Fig. 9. Fig. 9 shows the relationship between each of the bands 800 to 807 that compose the 640 MHz channel and variables m, σ, and n in Fig. 6. An RU is composed of a plurality of subcarriers used to communicate a data signal or a pilot signal and does not include a null subcarrier.

An RU type indicates the number of subcarriers that compose one RU. For example, in the RU type of 26-tone RU, one RU is composed of 26 subcarriers. In the case of the channel width 640 MHz, RU types include 26-tone RU, 52-tone RU, 106-tone RU, 242-tone RU, 484-tone RU, 996-tone RU, 2×996-tone RU, 4×996-tone RU, and 8×996-tone RU. The numbers of subcarriers used to communicate a data signal or a pilot signal by RU in RU types are respectively 26, 52, 106, 242, 484, 996, 2 × 996, 4 × 996, and 8 × 996.

When, for example, the 640 MHz channel is composed of 26-tone RUs, m = 4 for the band 804 in Fig. 9, so the indexes of RUs that compose the band 804 are 37 × 4 + 1 to 37 × 4 + 37, that is, 149 to 185. σ = 1 and n = 0 in Fig. 9, the indexes of subcarriers that compose the RU149 are 1 × (0 + 13) to 1 × (0 + 38), that is, +13 to +38. As for each of the other bands 800 to 803, and 805 to 807 as well, the indexes of RUs that compose a corresponding one of the bands and the indexes of subcarriers that compose each RU can be found. When the 640 MHz channel is composed of 26-tone RUs, there are an RU1 to an RU296. The minimum index of subcarriers used to carry a data or pilot signal is -4083, and the maximum index is +4083. There are also null subcarriers not included in RUs between these.

When the 640 MHz channel is composed of 996-tone RUs, m = 3 for the band 803 in Fig. 7, so the index of an RU that composes the band 803 is 3 + 1, that is, 4. σ = -1 and n = 0 in Fig. 7, so the indexes of subcarriers that compose the RU4 are -1 × (0 + 12) to -1 × (0 + 509) and -1 × (0 + 515) to -1 × (0 + 1012), that is, -12 to -509, and -515 to -1012. As for each of the other bands 800 to 803, and 805 to 807 as well, the RU indexes of RUs that compose a corresponding one of the bands and the indexes of subcarriers that compose each RU can be found. When the 640 MHz channel is composed of 996-tone RUs, there are an RU1 to an RU8. The minimum index of subcarriers used to communicate a data signal or a pilot signal is -4084, and the maximum index is +4084. There are also null subcarriers not included in the RUs between the minimum index and the maximum index of subcarriers used.

When the RU type is of 996-tone RU, the indexes of subcarriers that are pilot subcarriers of the bands 800 to 807 are respectively {σ × (44 + n), σ × (112 + n), σ × (178 + n), σ × (246 + n), σ × (292 + n), σ × (360 + n), σ × (426 + n), σ × (494 + n), σ × (530 + n), σ × (598 + n), σ × (664 + n), σ × (732 + n), σ × (778 + n) , σ × (846 + n), σ × (912 + n), σ × (980 + n)}. For this reason, the indexes of subcarriers that are pilot subcarriers in the band 803 in the case where the 640 MHz channel is composed of 996-tone RUs are respectively {-44, -112, -178, -246, -292, -360, - 426, -494, -530, -598, -664, -732, -778, -846, -912, -980}.

When the 640 MHz channel is composed of 8×996-tone RUs, the bandwidth of 640 MHz is composed of one RU. In other words, the index of an RU that composes the bands 800 to 807 is 1. As for the band 800, σ = -1 and n = 3072 in Fig. 9, so the indexes of subcarriers that compose the region of the band 800 of the RU1 are -1 × (3072 + 12) to -1 × (3072 + 509), and -1 × (3072 + 515) to -1 × (3072 + 1012), that is, -3084 to -3581, and -3587 to -4084. As for the band 807, σ = 1 and n = 3072 in Fig. 9, so the indexes of subcarriers that compose the region of the band 807 of the RU1 are 1 × (3072 + 12) to 1 × (3072 + 509), and 1 × (3072 + 515) to 1 × (3072 + 1012), that is, 3084 to 3581, and 3587 to 4084. As for each of the other bands 801 to 806 as well, the indexes of subcarriers that compose the region of a corresponding one of the bands 801 to 806 in the RU1 can be found. When the 640 MHz channel is composed of 8×996-tone RUs, there is only an RU1. The minimum index of subcarriers used to carry a data signal or a pilot signal is -4084, and the maximum index is +4084. There are also indexes that indicate null subcarriers not included in the RU between the minimum index and the maximum index of subcarriers used.

When the RU type is of 8×996-tone RU, the indexes of subcarriers that are pilot subcarriers of the bands 800 to 807 are respectively {σ × (44 + n), σ × (112 + n), σ × (178 + n), σ × (246 + n), σ × (292 + n), σ × (360 + n), σ × (426 + n), σ × (494 + n), σ × (530 + n), σ × (598 + n), σ × (664 + n), σ × (732 + n), σ × (778 + n) , σ × (846 + n), σ × (912 + n), σ × (980 + n)}. For this reason, the indexes of subcarriers that are pilot subcarriers in the band 800 in the case where the 640 MHz channel is composed of 8×996-tone RUs are respectively {--3116, -3184, -3250, -3318, -3364, - 3432, -3498, -3566, -3602, -3670, -3736, -3804, -3850, - 3918, -3984, -4052}. In this way, in the present embodiment, the positions of the data subcarriers and pilot subcarriers on the frequency axis are repeated eight times in units of 80 MHz.

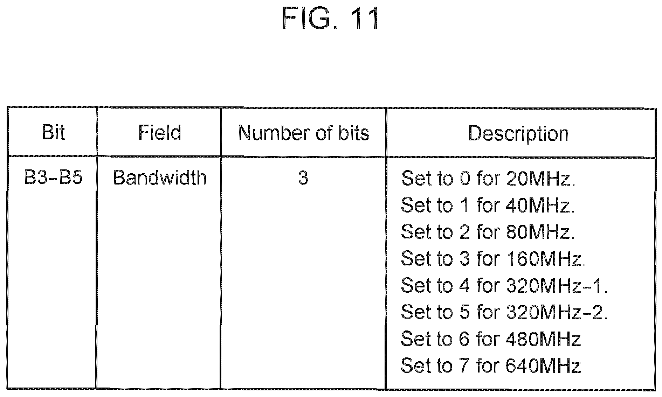

The communication apparatus 101 incorporates information indicating the channel width of a PPDU to transmit, into, for example, a Bandwidth field of a U-SIG-1 part of a U-SIG field present in an EHT preamble. A U-SIG field is a field containing necessary information to interpret a PPDU compliant with Exstremely High Throughput (EHT), that is, the IEEE 802.11be standard, or subsequent IEEE 802.11 standards. A U-SIG-1 part is a field containing information common to the IEEE 802.11be standard and subsequent IEEE 802.11 standards. A U-SIG-1 part is composed of 26 bits. The bits are referred to as B0 to B25 in order from the least significant bit toward the most significant bit. A Bandwidth field is located at B3 to B5. Fig. 11 shows an example of the relationship between the value of Bandwidth field and a channel width. A value set for the Bandwidth field in the case of each channel width is written as an unsigned integer in a Description field. For example, six is set in the case of 480 MHz, and seven is set in the case of 640 MHz.

The communication apparatus 101 may incorporate information indicating the channel width of a PPDU to transmit, into a field indicating the channel width of a UHR PPDU present in a preamble newly defined in the IEEE 802.11UHR standard (for example, referred to as UHR preamble). This field may be present as a subfield in a necessary field to interpret a UHR PPDU compliant with the IEEE 802.11UHR standard (for example, referred to as UHR-SIG field) present in the UHR preamble.

The communication apparatus 101 may incorporate information indicating the channel width of a PPDU to transmit, into the Bandwidth field of the U-SIG-1 part of the U-SIG field present in the EHT preamble and a field indicating the channel width of the PPDU, present in the UHR preamble. In this case, when the value of the Bandwidth field of the U-SIG-1 part of the U-SIG field present in the EHT preamble is six or seven, the information indicating the channel width indicates that the channel width is wider than or equal to 480 MHz. Then, the value of the field indicating the channel width of the PPDU, present in the UHR preamble, may indicate whether the channel width is 480 MHz or 640 MHz.

The field referred to as the U-SIG field in the IEEE 802.11be standard and its subfield (including the Bandwidth field) may be included in the UHR preamble. In this case, the EHT preamble does not need to be present in a UHR PPDU.

The communication apparatus 101 may incorporate a field indicating information related to the type of RU that composes a PPDU into a field indicating information related to the type of RU that composes the PPDU (for example, referred to as RU Allocation subfield) present in the UHR preamble. This field may be present as a subfield in the UHR-SIG field. This field may be present as a subfield in a field including information common to a plurality of users (for example, referred to as Common field) in the UHR-SIG field.

When the communication apparatus 101 completes transmission of the PPDU, the process proceeds to step S405.

On the other hand, when the channel width determined by the communication apparatus 101 in step S402 is narrower than or equal to 320 MHz, the process proceeds to step S404.

In step S404, the communication apparatus 101 transmits a PPDU containing data fields having subcarrier configurations according to the channel width, defined by the IEEE 802.11be standard or the previous standards. Then, when transmission of the PPDU completes, the process proceeds to step S405.

When the communication apparatus 101 determines in step S400 that there is no data to transmit as well, the process proceeds to step S405.

In step S405, the communication apparatus 101 determines whether to disconnect connection of all the STAs connected to the AP 101 in accordance with instructions or the like input from a user. When the communication apparatus 101 determines to disconnect, the communication apparatus 101 disconnects connection with all the STAs and ends the operations related to transmission of the PPDU described up to here. On the other hand, when the communication apparatus 101 determines to maintain connection, the process returns to step S400, and the communication apparatus 101 continues the operations related to transmission of the PPDU. When the host apparatus is any one of the STAs 101 to 103, the host apparatus determines whether to disconnect connection with the AP 101 in accordance with instructions or the like input from the user. When the host apparatus determines to disconnect, the host apparatus disconnection connection with the AP 101 and ends the operations related to transmission of the PPDU described up to here. On the other hand, when the host apparatus determines to maintain connection with the AP 101, the process returns to step S400, and the host apparatus continues the operations related to transmission of the PPDU.

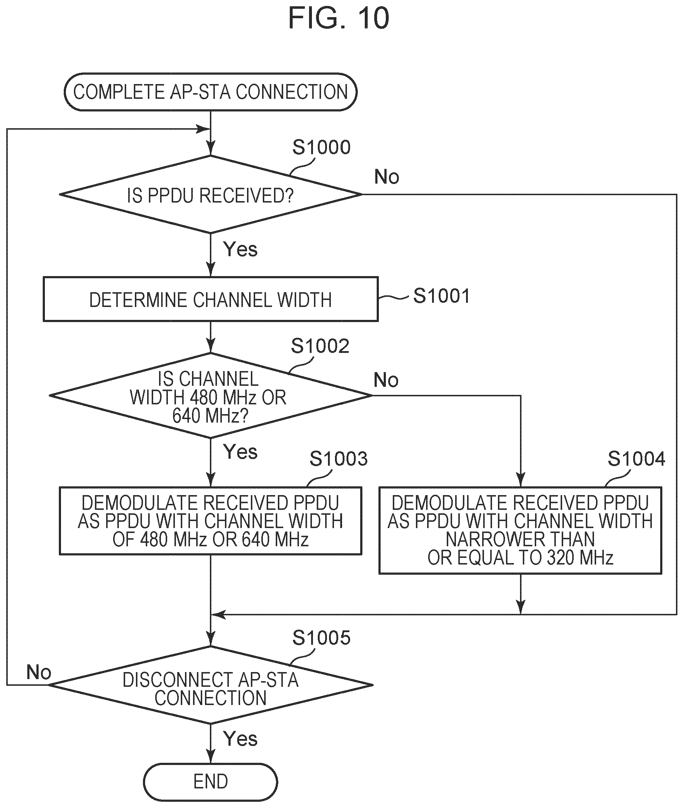

Next, the flow of the communication apparatuses 101 to 104 related to reception of a PPDU will be described with reference to Fig. 10. The flow shown in Fig. 10 starts when, for example, the AP 101 and any one of the STAs 102 to 104 connect with each other, that is, the STA joins Basic Service Set (BSS) established by the AP 101. As for the STAs 102 to 104, the flow starts when the STA connects with the AP 101.

When the STAs 102 to 104 receive a Beacon frame transmitted from the AP 101, the STAs 102 to 104 transmit an Association Request frame for a request to join the BSS to the AP 101, and then, for example, receive an Association Response frame that is a response frame for the Association Request frame, thus joining the BSS.

The STAs 102 to 104, in advance of an exchange of Association Request and Response frames, may transmit a Probe Request frame for finding an AP, and the AP 101 may receive a Probe Response frame that is a response frame for the Probe Request frame.

Hereinafter, the flow of the communication apparatus 101 will be described; however, the communication apparatuses 102 to 104 that are STAs also operate in accordance with a similar flow to this flow.

In step S1000, the communication apparatus 101 determines whether a new PPDU is received. When the communication apparatus 101 determines that a new PPDU is received, the process proceeds to step S1001.

In step S1001 to step S1002, the communication apparatus 101 determines the channel width of the received PPDU. The communication apparatus 101 determines the channel width of the PPDU in accordance with, for example, the value of the field described in the description of step S403. When the communication apparatus 101 determines that the channel width of the PPDU is 480 MHz or 640 MHz, the process proceeds to step S1003.

When the communication apparatus 101 determines in step S1003 that the channel width of the PPDU is 480 MHz, the communication apparatus 101 demodulates the received PPDU as a PPDU in which the configuration of subcarriers includes a data field described in the description of step S403 and indicating that the channel width is 480 MHz. When the communication apparatus 101 determines that the channel width of the PPDU is 640 MHz, the communication apparatus 101 demodulates the received PPDU as a PPDU in which the configuration of subcarriers includes a data field described in the description of step S403 and indicating that the channel width is 640 MHz. At this time, the communication apparatus 101 reads the subcarrier indexes of subcarriers used to carry a data or pilot signal according to the channel width and the type of RUs that compose the channel from the storage unit 202. Those pieces of information are stored in the storage unit 202 in advance. The communication apparatus 101 handles only signals superimposed on the subcarriers of the subcarrier indexes used as significant signals. The communication apparatus 101 ignores signals superimposed on the subcarriers of the other subcarrier indexes. When the communication apparatus 101 demodulates the PPDU, the process proceeds to step S1005.

On the other hand, when the communication apparatus 101 determines in step S1001 to step S1002 that the channel width of the received PPDU is narrower than or equal to 320 MHz, the process proceeds to step S1004.

In step S1004, the communication apparatus 101 demodulates the received PPDU on the assumption that the received PPDU is a PPDU including a data field having a subcarrier configuration according to the channel width, defined in compliant with the IEEE 802.11be standard or the previous standards. When the communication apparatus 101 demodulates the PPDU, the process proceeds to step S1005.

In step S1005, the communication apparatus 101 determines whether to disconnect connection of all the STAs connected to the communication apparatus 101 in accordance with instructions or the like input from a user. When the communication apparatus 101 determines to disconnect, the communication apparatus 101 disconnects connection with all the STAs and ends the operations related to reception of the PPDU described up to here. On the other hand, when the communication apparatus 101 determines to maintain connection, the process returns to step S1000, and the communication apparatus 101 continues the operations related to reception of the PPDU. When the host apparatus is any one of the STAs 101 to 103, the host apparatus determines whether to disconnect connection with the AP 101 in accordance with instructions or the like input from the user. When the host apparatus determines to disconnect, the host apparatus disconnection connection with the AP 101 and ends the operations related to reception of PPDU described up to here. On the other hand, when the host apparatus determines to maintain connection with the AP 101, the process returns to step S1000, and the host apparatus continues the operations related to reception of the PPDU.

In the present embodiment, in the 480 MHz or 640 MHz channel, the positions of subcarriers on the frequency axis, usable to carry a data or pilot signal are repeated multiple times in units of 80 MHz. Therefore, a circuit or software concerned with processing, such as transmission, reception, modulation, and demodulation of a PPDU, can be simplified.

It is also applicable that a recording medium on which a program code of software that implements the above-described functions is recorded is supplied to a system or an apparatus and a computer (a CPU or an MPU) of the system or the apparatus reads and runs the program code stored in the recording medium. In this case, the program code itself read from the storage medium implements the functions of the above-described embodiment, and the storage medium in which the program code is stored is a component of the above-described apparatus.

The strings of character string parts corresponding to the names of standards like the IEEE 802.11UHR and the standard names that are included in field names including the same character strings as the standard names, typically such as UHR-SIG, UHR-STF, UHR-LTF, and UHR-SIG MCS, are not limited thereto. The string of the character string part may be, for example, HR (High Reliability). The string of the character string part may be HRL (High ReLiability). The string of the character string part may be HRW (High Reliability Wireless). The string of the character string part may be VHT (Very High Reliability). The string of the character string part may be EHR (Extremely High Reliability). The string of the character string part may be UHR (Ultra High Reliability). The string of the character string part may be LL (Low Latency). The string of the character string part may be VLL (Very Low Latency). The string of the character string part may be ELL (Extremely Low Latency). The string of the character string part may be ULL (Ultra Low Latency). The string of the character string part may be HRLL (High Reliable and Low Latency). The string of the character string part may be URLL (Ultra-Reliable and Low Latency). The string of the character string part may be URLLC (Ultra-Reliable and Low Latency Comminications). The string of the character string part may be another different name. For example, in the case of HR, the field names are also field names including character strings corresponding to the standard name, such as HR-SIG, HR-STF, HR-LTF, and HR-SIG MCS, simulating the standard.

Examples of a storage medium for supplying a program code include a flexible disk, a hard disk drive, an optical disk, a magneto-optical disc, a CD-ROM, a CD-R, a magnetic tape, a nonvolatile memory card, a ROM, and a DVD.

Not only the above-described functions are implemented by running a program code read by a computer but also the OS running on the computer may implement the above-described functions by executing part or the whole of actual processing in accordance with instructions of the program code. OS is the abbreviation of Operating System.

Furthermore, a program code read from a storage medium is written to a function expansion board inserted in a computer or a memory included in a function expansion unit connected to the computer. Then, a CPU included in the function expansion board or the function expansion unit may implement the above-described functions by executing part or the whole of actual processing in accordance with instructions of the program code.

The present invention may also be implemented by a process in which a program that implements one or more functions of the above-described embodiments is supplied to a system or an apparatus via a network or a storage medium and one or more processors in a computer of the system or the apparatus read and run the program. Alternatively, the embodiment of the present invention may be implemented by a circuit (for example, ASIC) that implements one or more functions.

The present invention is not limited to the above-described embodiment. Various changes or modifications are applicable without departing from the spirit and scope of the present invention. Therefore, the following claims are attached to show the scope of the present invention.

This application claims the benefit of Japanese Patent Application No. 2022-122022 filed July 29, 2022, which is hereby incorporated by reference herein in its entirety.

## Claims

1. A communication apparatus comprising:
a transmission unit arranged to transmit a Physical Layer Protocol Data Unit (PPDU) compliant with an IEEE 802.11 series standard by using 5880 data subcarriers and 96 pilot subcarriers, wherein
the transmission unit is arranged to, when the transmission unit transmits the PPDU with a bandwidth of 480 MHz, transmit the PPDU composed of the 5880 data subcarriers and the 96 pilot subcarriers in a predetermined order.

2. A communication apparatus comprising:
a transmission unit arranged to transmit a Physical Layer Protocol Data Unit (PPDU) compliant with an IEEE 802.11 series standard by using 7840 data subcarriers and 128 pilot subcarriers, wherein
the transmission unit is arranged to, when the transmission unit transmits the PPDU with a bandwidth of 640 MHz, transmit the PPDU composed of the 7840 data subcarriers and the 128 pilot subcarriers in a predetermined order.

3. A communication apparatus comprising:
a receiving unit arranged to receive a Physical Layer Protocol Data Unit (PPDU) compliant with an IEEE 802.11 series standard by using 5880 data subcarriers and 96 pilot subcarriers; and
a demodulation unit arranged to, when the PPDU with a bandwidth of 480 MHz is received, demodulate the PPDU composed of the 5880 data subcarriers and the 96 pilot subcarriers in a predetermined order.

4. A communication apparatus comprising:
a receiving unit arranged to receive a Physical Layer Protocol Data Unit (PPDU) compliant with an IEEE 802.11 series standard by using 7840 data subcarriers and 128 pilot subcarriers; and
a demodulation unit arranged to, when the PPDU with a bandwidth of 640 MHz is received, demodulate the PPDU composed of the 7840 data subcarriers and the 128 pilot subcarriers in a predetermined order.

5. The communication apparatus according to Claim 1 or 3, wherein
the PPDU with a bandwidth of 480 MHz is composed of 5880 data subcarriers, 96 pilot subcarriers, and 168 null subcarriers, and an interval between the subcarriers is 78.125 kHz.

6. The communication apparatus according to Claim 2 or 4, wherein
the PPDU with a bandwidth of 640 MHz is composed of 7840 data subcarriers, 128 pilot subcarriers, and 224 null subcarriers, and an interval between the subcarriers is 78.125 kHz.

7. A control method for a communication apparatus, the control method comprising:
a transmission step of transmitting a Physical Layer Protocol Data Unit (PPDU) compliant with an IEEE 802.11 series standard by using 5880 data subcarriers and 96 pilot subcarriers, wherein
the communication apparatus is arranged to, when the communication apparatus transmits the PPDU with a bandwidth of 480 MHz, transmit the PPDU composed of the 5880 data subcarriers and the 96 pilot subcarriers in a predetermined order.

8. A control method for a communication apparatus, the control method comprising:
a transmission step of transmitting a Physical Layer Protocol Data Unit (PPDU) compliant with an IEEE 802.11 series standard by using 7840 data subcarriers and 128 pilot subcarriers, wherein
the communication apparatus is arranged to, when the communication apparatus transmits the PPDU with a bandwidth of 640 MHz, transmit the PPDU composed of the 7840 data subcarriers and the 128 pilot subcarriers in a predetermined order.

9. A control method for a communication apparatus, the control method comprising:
a receiving step of receiving a Physical Layer Protocol Data Unit (PPDU) compliant with an IEEE 802.11 series standard by using 5880 data subcarriers and 96 pilot subcarriers; and
a demodulation step of, when the PPDU with a bandwidth of 480 MHz is received, demodulating the PPDU composed of the 5880 data subcarriers and the 96 pilot subcarriers in a predetermined order.

10. A control method for a communication apparatus, the control method comprising:
a receiving step of receiving a Physical Layer Protocol Data Unit (PPDU) compliant with an IEEE 802.11 series standard by using 7840 data subcarriers and 128 pilot subcarriers; and
a demodulation step of, when the PPDU with a bandwidth of 640 MHz is received, demodulating the PPDU composed of the 7840 data subcarriers and the 128 pilot subcarriers in a predetermined order.

11. A program for causing a computer to operate as the units of the communication apparatus according to any one of Claims 1 to 4.
